(19) Europäisches Patentamt / European Patent Office / Office européen des brevets

(11) **EP 2 279 216 B1**

(12) # EUROPEAN PATENT SPECIFICATION

(45) Date of publication and mention of the grant of the patent:
**28.09.2011 Bulletin 2011/39**

(21) Application number: **09753821.9**

(22) Date of filing: **20.05.2009**

(51) Int Cl.:
***C08F 210/06*** *(2006.01)* ***F16L 9/12*** *(2006.01)*

(86) International application number:
**PCT/EP2009/056164**

(87) International publication number:
**WO 2009/144166 (03.12.2009 Gazette 2009/49)**

(54) **PROPYLENE-HEXENE RANDOM COPOLYMER PRODUCED IN THE PRESENCE OF A ZIEGLER NATTA CATALYST**

IN GEGENWART EINES ZIEGLER-NATTA-KATALYSATORS HERGESTELLTES STATISTISCHES PROPYLEN-HEXEN-COPOLYMER

COPOLYMÈRE ALÉATOIRE PROPYLÈNE-HEXÈNE PRODUIT EN PRÉSENCE D UN CATALYSEUR DE ZIEGLER NATTA

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.05.2008 EP 08157082**

(43) Date of publication of application:
**02.02.2011 Bulletin 2011/05**

(73) Proprietor: **Borealis AG**
**1220 Vienna (AT)**

(72) Inventors:
- **BERNREITNER, Klaus**
  **4010 Linz (AT)**
- **STADLBAUER, Manfred**
  **4040 Linz (AT)**
- **HAFNER, Norbert**
  **4020 Linz (AT)**
- **TÖLTSCH, Wilfried**
  **4614 Marchtrenk (AT)**
- **JÄÄSKELÄINEN, Pirjo**
  **06150 Porvoo (FI)**

(74) Representative: **Lux, Berthold**
**Maiwald Patentanwalts GmbH**
**Elisenhof**
**Elisenstraße 3**
**80335 München (DE)**

(56) References cited:
**EP-A- 0 682 066** **WO-A-03/042260**
**WO-A-2006/002778**

EP 2 279 216 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a propylene/1-hexene copolymer, a method for its preparation, and its use for pipes, in particular pressure pipes.

Polymer materials are frequently used for the preparation of pipes for various purposes, such as fluid transport, e.g. water or natural gas. The transported fluid may be pressurized and have varying temperature, usually within the range of about 0°C to about 70°C. Such pipes are typically made of polyolefins. Because of the high temperatures involved, hot water pipes made from polyolefins have to meet specific requirements. The temperature in a hot water pipe might range from 30°C to 70°C. However, peak temperature can be up to 100°C. To secure long term use, the selected pipe material must be able to withstand a temperature exceeding the range mentioned above, According to the standard DIN 8078, a hot water pipe made of propylene homo- or copolymer must have a run time of at least 1000 h without failure at 95°C and a pressure of 3.5 MPa.

Due to its high thermal resistance, if compared to other polyolefins, polypropylene is particularly useful for applications at increased temperature, such as hot water pipes. However, besides thermal resistance, a polypropylene useful for pipe applications needs to have high stiffness in combination with high resistance to slow crack growth.

There are two different cracking modes of polypropylene pipes: ductile or brittle failure.

Ductile failure is associated with macroscopic yielding, i.e. there is a large material pull out adjacent to the location of failure.

However, the majority of cracking taking place in polypropylene pipes is of brittle type and does not exhibit large deformation. Brittle failure usually occurs under low stress and takes a long time to propagate through the material via the process of slow crack growth. Such type of failure is the least-desirable since it is difficult to detect at an early stage.

Thus, for any polypropylene being useful for pipe applications, in particular pressure pipe applications, it is desired to have a beneficial compromise between high resistance to slow crack growth, thermal resistance, rigidity, and impact strength. However, quite frequently it turns out that one of these properties can only be achieved on the expense of the other properties.

Pipes made of propylene homopolymer show high thermal resistance in combination with high rigidity whereas resistance to slow crack growth is lowered. Slow crack growth properties can be improved by using propylene copolymers. However, the incorporation of comonomers into the polypropylene chain has a detrimental impact on thermal resistance and rigidity, an effect that needs to be compensated by mixing with an additional propylene homopolymer component. Furthermore, the higher the comonomer content, the higher is the risk that polymeric material is washed out by the transport fluid.

WO 2005/040271 A1 discloses a pressure pipe comprising a resin formed from (i) a random copolymer comprising units of propylene and a C2 to C10 alpha-olefin, and (ii) a propylene-ethylene elastomer.

WO 2006/002778 A I discloses a pipe system having at least one layer comprising a semi-crystalline random copolymer of propylene and 1-hexene. The copolymer exhibits a broad monomodal molecular weight distribution and has a rather high content of xylene solubles.

WO 03/042260 discloses a pressure pipe made from a propylene copolymer which is at least partially crystallized in the β-modification.

Considering the requirements of pressure pipe materials discussed above, it is an object of the present invention to provide a polypropylene having a high resistance to slow crack propagation while still keeping thermal resistance and rigidity on a high level. Furthermore, it is desired to minimize the potential risk of washing out polymeric material from the pipe by the pressurized fluid.

The finding of the present invention is to provide a β-nucleated propylene 1-hexene copolymer with low amounts of xylene solubles.

Thus the object outlined above is in particular solved by a propylene copolymer (A)

(a) comprising at least 1-hexene as a comonomer,
(b) having a comonomer content in the range of 1.0 to 3.0 wt.-%,
(c) having a xylene soluble fraction equal or below 2.5 wt.%, and
(d) being partially crystallized in the β-modification, preferably having a β-modification of at least 50 %.

Preferably the copolymer (A) comprises a β-nucleating agent (B).

Alternatively the present invention can be defined by a propylene copolymer (A)

(a) comprising at least 1-hexene as a comonomer,
(b) having a comonomer content in the range of 1.0 to 3.0 wt.-%, and
(c) having a xylene soluble fraction equal or below 2.5 wt.-%,

wherein the propylene copolymer (A) comprises additionally a β-nucleating agent (B).

Surprisingly it has been found out that with said propylene copolymer (A) pipes are obtainable having superior slow crack propagation performance compared to pipes being state of the art. Moreover not only the slow crack propagation performance of the pipes based on the inventive propylene copolymer (A) is outstanding but additionally also the stiffness and the impact performance of the pipe and of the propylene copolymer (A) are excellent. In particular the Izod impact resistance at low temperatures and the flexural modulus are above average (compare table 5).

The present invention demands specific requirements for the inventive materials, which are described in the following in more detail.

One important requirement of the present invention is that the propylene copolymer (A) has a rather low xylene soluble fraction.

Xylene solubles are the part of the polymer soluble in cold xylene determined by dissolution in boiling xylene and letting the insoluble part crystallize from the cooling solution (for the method see below in the experimental part). The xylene solubles fraction contains polymer chains of low stereo-regularity and is an indication for the amount of non-crystalline areas.

Accordingly it is preferred that the xylene solubles of the inventive propylene copolymer (A) is equal or less than 2.5 wt.-%, more preferably less than 2.3 wt.-% and yet more preferably less than 2.2 wt.-%. In preferred embodiments the xylene solubles are in the range of 0.1 to 2.5 wt.-% and more preferably in the range of 0.1 to 2.3 wt.-%.

As further requirement of the present invention is the inventive propylene copolymer (A) must be β-nucleated, i.e. the propylene copolymer (A) must be partially crystallized in the ß-modification. Thus it is preferred that the amount of β-modification of the propylene copolymer (A) is at least 50 %, more preferably at least 60 %, still more preferably at least 65 %, yet more preferably at least 70 %, still yet more preferably at least 80 %, like about 90 % (determined by DSC using the second heat as described in detail in the example section).

Of course the propylene copolymer (A) may also comprise ß-nucleating agents (B). As β-nucleating agent (B) any nucleating agent can be used which is suitable for inducing crystallization of the propylene copolymer (A) in the hexagonal or pseudo-hexagonal modification. Preferred β-nucleating agents (B) are those listed below, which also includes their mixtures.

Suitable types of β-nucleating agents (B) are

- dicarboxylic acid derivative type diamide compounds from $C_5$ to $C_8$-cycloalkyl monoamines or $C_6$ to $C_{12}$-aromatic monoamines and $C_5$ to $C_8$-aliphatic, $C_5$ to $C_8$-cycloaliphatic or $C_6$ to $C_{12}$-aromatic dicarboxylic acids, e.g.
    - N, N'-di-$C_5$-$C_8$-cycloalkyl-2, 6-naphthalene dicarboxamide compounds such as N, N'-dicyclohexyl-2, 6-naphthalene dicarboxamide and N, N'-dicyclooctyl-2, 6-naphthalene dicarboxamide,
    - N,N-di-$C_5$-$C_8$-cycloalkyl-4,4-biphenyldicarboxamide compounds such as N, N'-dicyclohexyl-4, 4-biphenyldicarboxamide and N, N'-dicyclopentyl-4, 4-biphenyldicarboxamide,
    - N, N'-di-$C_5$-$C_8$-cycloalkyl-terephthalamide compounds such as N, N'-dicyclohexylterephthalamide and N, N'-dicyclopentylterephthalamide,
    - N, N'-di-$C_5$-$C_8$-cycloalkyl-1, 4-cyclohexanedicarboxamide compounds such as N, N'-dicyclo-hexyl-1,4-cyclohexanedicarboxamide and N, N'-dicyclohexyl-1, 4-cyclopentanedicarboxamide,

- diamine derivative type diamide compounds from$C_5$-$C_8$-cycloalkyl monocarboxylic acidsor $C_6$-$C_{12}$-aromatic monocarboxylic acids and $C_5$-$C_8$-cycloaliphatic or $C_6$-$C_{12}$- aromatic diamines, e. g.
    - N,N-$C_6$-C$1_2$-arylene-bis-benzamide compounds such as N,N'-p-phenylene-bis-benzamide and N,N'-1,5-naphthalene-bis-benzamide,
    - N,N'-$C_5$-$C_8$-cycloalkyl-bis-benzamide compounds such as N,N'-1,4-cyclopentane-bis-benzamide and N,N'-1,4-cyclohexane-bis-benzamide,
    - N,N-p-$C_6$-$C_{12}$-arylene-bis-$C_5$-$C_8$-cycloalkylcarboxamide compounds such as N,N'-1,5-naphthalene-bis-cyclohexanecarboxamide and N,N'-1,4-phenylene-bis-cyclohexanecarboxamide, and
    - N,N'-$C_5$-$C_8$-cycloalkyl-bis-cyclohexanecarboxamide compounds such as N,N'-1,4-cyclopentane-bis-cyclohexanecarboxamide and N,N'-1,4-cyclohexane-bis-cyclohexanecarboxamide,

- amino acid derivative type diamide compounds from amidation reaction of $C_5$-$C_8$-alkyl, $C_5$-$C_8$-cycloalkyl-or $C_6$-$C_{12}$-arylamino acids,$C_5$-$C_8$-alkyl-, $C_5$-$C_8$-cycloalkyl-or $C_6$-$C_{12}$-aromatic monocarboxylic acid chlorides and $C_5$-$C_8$-alkyl-, $C_5$-$C_8$-cycloalkyl-or $C_6$-$C_{12}$-aromatic mono-amines, e.g.
    - N-phenyl-5-(N-benzoylamino)pentaneamide and N-cyclohexyl-4-(N-cyclohexyl-carbonylamino)benzamide.

Further suitable of β-nucleating agents (B) are

- quinacridone type compounds, e.g.
  quinacridone, dimethylquinacridone and dimethoxyquinacridone,
- quinacridonequinone type compounds, e.g.
  quinacridonequinone, a mixed crystal of 5,12-dihydro(2,3b)acridine-7,14-dione with quino(2,3b)acridine-6,7,13,14-(5H, 12H)-tetrone and dimethoxyquinacridonequinone and
- dihydroquinacridone type compounds, e. g.
  dihydroquinacridone, dimethoxydihydroquinacridone and dibenzodihydroquinacridone.

Still further suitable β-nucleating agents (B) are

- dicarboxylic acid salts of metals from group IIa of periodic system, e. g. pimelic acid calcium salt and suberic acid calcium salt ; and
- mixtures of dicarboxylic acids and salts of metals from group IIa of periodic system.

Still further suitable β-nucleating agents (B) are

- salts of metals from group IIa of periodic system and imido acids of the formula

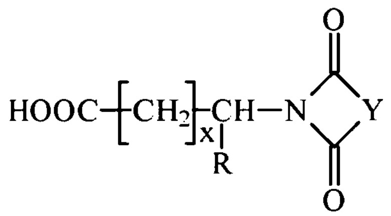

wherein x = 1 to 4; R = H,-COOH, $C_1$-$C_{12}$-alkyl, $C_5$-$C_8$-cycloalkyl or $C_6$-$C_{12}$-aryl, and Y =$C_1$-$C_{12}$-alkyl, $C_5$-$C_8$-cycloalkyl or $C_6$-$C_{12}$-aryl-substituted bivalent $C_6$-$C_{12}$-aromatic residues, e.g.
calcium salts of phthaloylglycine, hexahydrophthaloylglycine, N-phthaloylalanine and/or N-4-methylphthaloylglycine.

Preferred β-nucleating agents (B) are any one or mixtures of N, N'-dicyclohexyl-2, 6-naphthalene dicarboxamide, quinacridone type or pimelic acid calcium-salt (EP 0 682 066).

The amount of ß-nucleating agents (B) within the propylene copolymer (B) is preferably up to 2.0 wt.-%, more preferably up to 1.5 wt.-%, like 1.0 wt.-%. Thus it is appreciated that the ß-nucleating agents (B) are present within the propylene copolymer (A) from 0.0001 to 2.0000 wt.-%, more preferably from 0.0001 to 2.0000 wt.-%, yet more preferably from 0.005 to 0.5000 wt.-%.

In this context it is mentioned that the polypropylene copolymer (A) may comprise additives as usual in the art. However, the polypropylene copolymer (A) does not comprise further other polymer types. Thus the propylene copolymer (A) can be seen as a composition of said propylene polymer (A) and the ß-nucleating agents (B) and optionally further additives, but without other polymers.

Accordingly the propylene polymer (A) may comprise up to 10 wt.-% additives, which includes the mandatory ß-nucleating agents (B) but optionally also fillers and/or stabilizers and/or processing aids and/or antistatic agents and/or pigments and/or reinforcing agents.

Further it is mandatory that the polypropylene copolymer (A) comprises at least 1-hexene as comonomer.

However, the propylene copolymer (A) may comprise further α-olefin(s), like C2, C4, C5, or C7 to C10 α-olefin (s). In such a case ethylene is in particular preferred. Thus in one preferred embodiment the propylene copolymer (A) is a terpolymer comprising propylene, 1-hexene and ethylene. However, it is more preferred that the propylene copolymer (A) does not comprise further comonomer(s), i.e. 1-hexene is the only comonomer of the propylene copolymer (A) (binary propylene-hexene copolymer).

Thus the binary propylene-1-hexene copolymer is particularly preferred.

More preferably the above defined propylene copolymer (A) is a random copolymer. Thus a random propylene copolymer according to the present invention is a random propylene copolymer produced by statistical insertion of units of 1-hexene (if present with units of ethylene or a C4, C5, or C7 to C10α-olefin, preferably ethylene, to give a random terpolymer).

The type of comonomer has a significant influence on a number of properties like crystallization behaviour,

stiffness, melting point or flowability of the polymer melt. Thus to solve the objects of the present invention, in particular to provide an improved balance between stiffness, impact resistance and slow crack propagation performance it is necessary that the propylene copolymer comprises 1-hexene as a comonomer at least in a detectable manner, in particular of at least 1.0 wt.-%.

On the other hand the increase of the comonomer content, in particular of 1-hexene, in the propylene copolymer (A) is associated with the increase of the xylene solubles fraction and thus the potential risk of washing out polymeric material from the pipe by the pressurized fluid. Moreover with increase of comonomer in the propylene copolymer (A) the stiffness drops undesirably.

Thus, to achieve especially good results the propylene copolymer (A) comprises preferably not more than up to 3.0 wt.-% comonomer, in particular 1-hexene, based on the weight of the propylene copolymer (A). As stated above the comonomer 1-hexene is mandatory whereas other $\alpha$-olefins can be additionally present. However the amount of additional $\alpha$-olefins shall preferably not exceed the amount of 1-hexene in the propylene copolymer (A). More preferably the amount of comonomer, in particular of 1-hexene, within the propylene copolymer is equal or below 2.2 wt.-%, still more preferably equal or below 2.0 wt.-% and yet more preferably equal or below 1.8 wt.-%. Accordingly the amount of comonomer, in particular 1-hexene, within the propylene copolymer (A) is from 1.0 to 3.0 wt.-%, more preferably from 1.0 to 2.2 wt.-%, still more preferably from 1.0 to 2.0 wt.-%, yet more preferably of 1.0 to 1.9 wt.-%, yet still more preferably of 1.0 to 1.8 wt.-%. In a particular preferred embodiment the amount of comonomer, in particular 1-hexene, is 1.0 to 1.8 wt.-%, more preferred 1.1 to 1.6 wt.-%.

In case the propylene copolymer (A) is a binary propylene-1-hexene copolymer - an embodiment which is particularly preferred - the ranges as defined in the previous paragraph refer to 1-hexene only.

The comonomer content of the propylene copolymer (A) can be determined with FT infrared spectroscopy, as described below in the examples.

Additionally it is preferred that the propylene copolymer (A) is an isotactic propylene copolymer. Thus it is preferred that the propylene copolymer has a rather high pentad concentration, i.e. higher than 90 %, more preferably higher than 92 %, still more preferably higher than 95 % and yet more preferably higher than 98 %.

Additionally it is appreciated that the propylene copolymer (A) is not chemically modified as it is known for instance from high melt strength polymers (HMS-polymer). Thus the propylene copolymer (A) is not cross-linked. The impact behaviour can normally also be improved by using branched polypropylenes as for instance described in EP 0 787 750, i.e. single branched polypropylene types (Y-polypropylenes having a backbone with a single long side-chain and an architecture resembles a "Y"). Such polypropylenes are characterized by rather high melt strength. A parameter of the degree of branching is the branching index g'. The branching index g' correlates with the amount of branches of a polymer. The branching index g' is defined as $g'=[IV]_{br}/[IV]_{lin}$ in which g' is the branching index, $[IV_{br}]$ is the intrinsic viscosity of the branched polypropylene and $[IV]_{lin}$ is the intrinsic viscosity of the linear polypropylene having the same weight average molecular weight (within a range oaf $\pm$10 %) as the branched polypropylene. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17,1301 (1949). Thus it is preferred that the branching index g' of the propylene copolymer (A) shall be at least 0.85, more preferably at least 0.90, yet more preferably at least 0.95, like 1.00.

It is further appreciated that the propylene copolymer (A) must show a rather broad molecular weight distribution (MWD). A broad molecular weight distribution (MWD) of propylene copolymer (A) is appreciated as it supports the improved stiffness behaviour of the propylene copolymer (A). It may also improve the processability of the propylene copolymer (A).

The molecular weight distribution (MWD) can be measured by SEC (also known as GPC), whereby it is expressed as Mw/Mn, or by a rheological measurement, like Polydispersity Index (PI) - measurement or Shear Thinning Index (SHI) - measurement. In the present case primarily the Polydispersity Index (PI) is used as measurement. All the measurements are known in art and further defined below in the example section.

Thus the propylene copolymer (A) has preferably a Polydispersity Index (PI) of at least 3.0, preferably of at least 3.5 more preferably of at least 4.0, still more preferably of at least 4.2. Upper values of the Polydispersity Index (PI) may be 8.0, like 6.0. Thus the Polydispersity Index (PI) of the propylene copolymer (A) is preferably in the range of 3.0 to 8.0, more preferably in the range of 3.5 to 7.0, yet more preferably in the range of 3.5 to 6.0.

A further indicator for a broad molecular weight distribution of the inventive propylene copolymer (A) is the weight average molecular weight ($M_w$). The weight average molecular weight ($M_w$) is the first moment of a plot of the weight of polymer in each molecular weight range against molecular weight.

The weight average molecular weight ($M_w$) is determined by size exclusion chromatography (SEC) using Waters Alliance GPCV 2000 instrument with online viscosimeter. The oven temperature is 145 °C. Trichlorobenzene is used as a solvent (ISO 16014).

It is preferred that the propylene copolymer (A) has a weight average molecular weight ($M_w$) of at least 500,000 g/mol, more preferably of at least 600,000 g/mol. Preferred ranges are from 650,000 g/mol to 1,500,000 g/mol, more

preferably from 750,000 to 1,200,000 g/mol.

Moreover the propylene copolymer (A) can be monomodal or multimodal, like bimodal.

The expression "multimodal" or "bimodal" used herein refers to the modality of the polymer, i.e. the form of its molecular weight distribution curve, which is the graph of the molecular weight fraction as a function of its molecular weight. As will be explained below, the polymer components of the present invention can be produced in a sequential step process, using reactors in serial configuration and operating at different reaction conditions. As a consequence, each fraction prepared in a specific reactor will have its own molecular weight distribution. When the molecular weight distribution curves from these fractions are superimposed to obtain the molecular weight distribution curve of the final polymer, that curve may show two or more maxima or at least be distinctly broadened when compared with curves for the individual fractions. Such a polymer, produced in two or more serial steps, is called bimodal or multimodal, depending on the number of steps.

In any case the Polydispersity Index (PI) and/or the weight average molecular weight ($M_w$) of the propylene copolymer (A) as defined in the instant invention refer(s) to the total propylene copolymer (A) be it monomodal or multimodal, like bimodal.

Preferably the comonomer content, like 1-hexene content, is higher in the high molecular weight fractions compared to the low molecular weight fractions. Thus the comonomer content, like 1-hexene content, in the fraction having an intrinsic viscosity of equal to higher than 3.3 dl/g is higher than in the fraction having an intrinsic viscosity of less than 3.3 dUg.

Further it is preferred that the propylene copolymer (A) has a rather low melt flow rate. The melt flow rate mainly depends on the average molecular weight. This is due to the fact that long molecules render the material a lower flow tendency than short molecules. An increase in molecular weight means a decrease in the MFR-value. The melt flow rate (MFR) is measured in g/10 min of the polymer discharged through a defined die under specified temperature and pressure conditions and the measure of viscosity of the polymer which, in turn, for each type of polymer is mainly influenced by its molecular weight but also by its degree of branching. The melt flow rate measured under a load of 2.16 kg at 230 °C (ISO 1133) is denoted as $MFR_2$ (230 °C).

Thus it is required that propylene copolymer (A) has a melt flow rate ($MFR_2$ (230 C)) equal or below 0.8 g/10min, more preferred of equal or less than 0.5 g/10min, still more preferred equal or less than 0.4 g/10min. On the other hand the $MFR_2$ (230 °C) should be more than 0.05 g/10min, more preferably more than 0.1 g/10min.

In case the melt flow rate is measured under a load of 5 kg the following is preferred.

The propylene copolymer (A) has preferably a melt flow rate ($MFR_5$ (230°C)) equal or below 4.0 g/10min, more preferred of equal or less than 2.5 g/10min, still more preferred equal or less than 1.8 g/10min. On the other hand the $MFR_2$ (230 °C) should be more than 0.1 g/10min, more preferably more than 0.3 g/10min. Accordingly a preferred range is from 0.3 to 1.8 g/10min.

Additionally it is appreciated that the propylene copolymer (A) enables to provide pipes with a rather high resistance to deformation, i.e. have a high stiffness. Accordingly it is preferred that the propylene copolymer (A) in an injection molded state and/or the pipes based on said material has(have) a flexural modulus measured according to ISO 178 of at least 950 MPa, more preferably of at least 1000 MPa , yet more preferably of at least 1100 MPa.

Furthermore it is appreciated that the propylene copolymer (A) enables to provide pipes having a rather high impact strength. Accordingly it is preferred that propylene copolymer (A) in an injection molded state and/or the pipes based on said material has(have) an impact strength measured according the Charpy impact test (ISO 179 (1eA)) at 23 °C of at least 35.0 kJ/$m^2$, more preferably of at least 40.0 kJ/$m^2$, yet more preferably of at least 41.0 kJ/$m^2$ and/or an high impact strength measured according the Charpy impact test (ISO 179 (1eA)) at -20°C of at least 1.5 kJ/$m^2$, more preferably of at least 1.8 kJ/$m^2$, yet more preferably of at least 2.0 kJ/$m^2$.

The instant propylene copolymer (A) has been in particular developed to improve the properties of pipes, in particular in terms of very good slow crack propagation performance by keeping the other properties, like resistance to deformation and impact strength, on a high level. Thus the instant invention is also directed to the use of the propylene copolymer (A) for a pipe, like a pressure pipe, or for parts of a pipe, like a pressure pipe, and for the manufacture of pipes.

In addition it is appreciated that the propylene copolymer (A) enables to provide pipes having a very good slow crack propagation performance. Thus it is preferred that the propylene copolymer (A) and/or the pipes based on said material has(have) a slow crack propagation performance measured according to the full notch creep test (FNCT) (ISO 16770; at 80 °C and applied stress of 4.0 MPa) of at least 7000 h.

The propylene copolymer (A) may comprise - in addition to the β-nucleating agents - further additives, like fillers not interacting with the β-nucleating agents, e.g. mica and/or chalk

Furthermore, the present invention is also directed to pipes and/or pipe fittings, in particular pressure pipes, comprising the propylene copolymer (A) as defined in the instant invention. These pipes, in particular pressure pipes, are in particular characterized by the flexural modulus, impact strength and slow crack propagation performance as defined in the previous paragraphs.

The term "pipe" as used herein is meant to encompass hollow articles having a length greater than diameter.

Moreover the term "pipe" shall also encompass supplementary parts like fittings, valves and all parts which are commonly necessary for e.g. a hot water piping system.

Pipes according to the invention also encompass single and multilayer pipes, where for example one or more of the layers is a metal layer and which may include an adhesive layer.

The propylene copolymer (A) used for pipes according to the invention may contain usual auxiliary materials, e. g. up to 10 wt.-% fillers and/or 0.01 to 2.5 wt.-% stabilizers and/or 0.01 to 1 wt.-% processing aids and/or 0.1 to 1 wt.-% antistatic agents and/or 0.2 to 3 wt.-% pigments and/or reinforcing agents, e. g. glass fibres, in each case based on the propylene copolymer (A) used (the wt.-% given in this paragraph refer to the total amount of the pipe and/or a pipe layer comprising said propylene copolymer (A)). In this respect, it has to be noted, however, that any of such auxiliary materials which serve as highly active $\alpha$-nucleating agents, such as certain pigments, are not utilized in accordance with the present invention.

In addition, it is preferred that the propylene copolymer (A) as defined above is produced in the presence of the catalyst as defined below. Furthermore, for the production of propylene copolymer (A) as defined above, the process as stated below is preferably used.

Thus the manufacture of the inventive propylene copolymer (A) comprises the steps of:

(a) producing a propylene copolymer (A) as defined herein, preferably in a multistage process and subsequently
(b) treating the propylene copolymer (A) with a $\beta$-nucleating agent (B), preferably at temperatures in the range of 175 to 300 °C, and
(c) cooling and crystallizing the propylene copolymer (A) composition.

In the following the process will be described in more detail.

Preferably the propylene copolymer (A) is produced in the presence of a Ziegler-Natta catalyst, in particular in the presence of a Ziegler-Natta catalyst capable of catalyzing polymerization of propylene at a pressure of 10 to 100 bar, in particular 25 to 80 bar, and at a temperature of 40 to 110 °C, in particular of 60 to 100 °C.

Generally, the Ziegler-Natta catalyst used in the present invention comprises a catalyst component, a cocatalyst component, an external donor, the catalyst component of the catalyst system primarily containing magnesium, titanium, halogen and an internal donor. Electron donors control the stereo-specific properties and/or improve the activity of the catalyst system. A number of electron donors including ethers, esters, polysilanes, polysiloxanes, and alkoxysilanes are known in the art.

The catalyst preferably contains a transition metal compound as a procatalyst component. The transition metal compound is selected from the group consisting of titanium compounds having an oxidation degree of 3 or 4, vanadium compounds, zirconium compounds, cobalt compounds, nickel compounds, tungsten compounds and rare earth metal compounds. The titanium compound usually is a halide or oxyhalide, an organic metal halide, or a purely metal organic compound in which only organic ligands have been attached to the transition metal. Particularly preferred are the titanium halides, especially titanium tetrachloride, titanium trichloride and titanium tetrachloride being particularly preferred.

Magnesium dichloride can be used as such or it can be combined with silica, e.g. by absorbing the silica with a solution or slurry containing magnesium dichloride. The lower alcohol used may preferably be methanol or ethanol, particularly ethanol.

One preferred catalyst to be used according to the invention is disclosed in EP 591 224 which discloses a method for preparing a pro-catalyst composition from magnesium dichloride, a titanium compound, a lower alcohol and an ester of phthalic acid containing at least five carbon atoms. According to EP 591 224 , a transesterification reaction is carried out at an elevated temperature between the lower alcohol and the phthalic acid ester, whereby the ester groups from the lower alcohol and the phthalic ester change places.

The alkoxy group of the phthalic acid ester used comprises at least five carbon atoms, preferably at least eight carbon atoms. Thus, as the ester may be used propylhexyl phthalate, dioctyl phthalate, di-isodecyl phthalate and ditridecyl phthalate. The molar ratio of phthalic acid ester and magnesium halide is preferably about 0.2: 1.

The transesterification can be carried out, e.g. by selecting a phthalic acid ester - a lower alcohol pair, which spontaneously or by the aid of a catalyst, which does not damage the pro-catalyst composition, transesterifies the catalyst at an elevated temperature. It is preferred to carry out the transesterification at a temperature which is 110 to 115 °C, preferably 120 to 140 °C.

The catalyst is used together with an organometallic cocatalyst and with an external donor. Generally, the external donor has the formula

$$R_nR'_m,Si(R''O)_{4-n-m}$$

wherein

R and R' can be the same or different and represent a linear, branched or cyclic aliphatic, or aromatic group;
R" is methyl or ethyl;
n is an integer of 0 to 3;
m is an integer of 0 to 3; and
n+m is 1 to 3.

In particular, the external donor is selected from the group consisting of cyclohexyl methylmethoxy silane (CHMMS), dicyclopentyl dimethoxy silane (DCPDMS), diisopropyl dimethoxy silane, di-isobutyl dimethoxy silane, and di-t-butyl dimethoxy silane.

An organoaluminium compound is used as a cocatalyst. The organoaluminium compound is preferably selected from the group consisting of trialkyl aluminium, dialkyl aluminium chloride and alkyl aluminium sesquichloride.
According to the invention, such catalysts are typically introduced into the first reactor only. The components of the catalyst can be fed into the reactor separately or simultaneously or the components of the catalyst system can be precontacted prior to the reactor.

Such pre-contacting can also include a catalyst pre-polymerization prior to feeding into the polymerization reactor. In the pre-polymerization, the catalyst components are contacted for a short period with a monomer before feeding to the reactor.

As stated above, the propylene copolymer (A) can have a unimodal or multimodal, like bimodal, molar mass distribution (MWD). Thus, the equipment of the polymerization process can comprise any polymerization reactors of conventional design for producing propylene copolymers (A). For the purpose of the present invention "slurry reactor" designates any reactor, such as a continuous or simple batch stirred tank reactor or loop reactor, operating in bulk or slurry and in which the polymer forms in particulate form. "Bulk" means a polymerization in reaction medium that comprises at least 60 wt.-% monomer. According to a preferred embodiment the slurry reactor comprises (is) a bulk loop reactor. By "gas phase reactor" is meant any mechanically mixed or fluid bed reactor. Preferably the gas phase reactor comprises a mechanically agitated fluid bed reactor with gas velocities of at least 0.2 m/sec.

Thus, the polymerization reactor system can comprise one or more conventional stirred tank slurry reactors, as described in WO 94/26794, and/or one or more gas phase reactors.

Preferably the reactors used are selected from the group of loop and gas phase reactors and, in particular, the process employs at least one loop reactor and at least one gas phase reactor. This alternative is particularly suitable for producing the propylene copolymer (A) with a broad molecular weight distribution (MWD) according to this invention. By carrying out the polymerization in the different polymerization reactors in the presence of different amounts of hydrogen the MWD of the product can be broadened and its mechanical properties improved. It is also possible to use several reactors of each type, e.g. one loop reactor and two or three gas phase reactors or two loop reactors and one gas phase reactor, in series.

In addition to the actual polymerization reactors used for producing the propylene copolymer (A) the polymerization reaction system can also include a number of additional reactors, such as pre- and/or post-reactors. The pre-reactors include any reactor for pre-polymerizing the catalyst with propylene. The post-reactors include reactors used for modifying and improving the properties of the polymer product.

All reactors of the reactor system are preferably arranged in series.

The gas phase reactor can be an ordinary fluidized bed reactor, although other types of gas phase reactors can be used. In a fluidized bed reactor, the bed consists of the formed and growing polymer particles as well as still active catalyst come along with the polymer fraction. The bed is kept in a fluidized state by introducing gaseous components, for instance monomer on such flowing rate which will make the particles act as a fluid. The fluidizing gas can contain also inert carrier gases, like nitrogen and also hydrogen as a modifier. The fluidized gas phase reactor can be equipped with a mechanical mixer.

The gas phase reactor used can be operated in the temperature range of 50 to 115 °C, preferably between 60 and 110 °C and the reaction pressure between 5 and 50 bar and the partial pressure of monomer between 2 and 45 bar.

The pressure of the effluent, i.e. the polymerization product including the gaseous reaction medium, can be released after the gas phase reactor in order optionally to separate part of the gaseous and possible volatile components of the product, e.g. in a flash tank. The overhead stream or part of it is re-circulated to the reactor.

After the polymerization the propylene copolymer (A) is blended with the β-nucleating agent (B) as defined above to obtain the propylene copolymer (A). The mixing can be carried out by methods known per se, e.g. by mixing the propylene copolymer (A) with the β-nucleating agent (B) in the desired weight relationship using a batch or a continuous process. As examples of typical batch mixers the Banbury and the heated roll mill can be mentioned. Continuous mixers are exemplified by the Farrel mixer, the Buss co-kneader, and single- or twin-screw extruders.

In case pipes shall be produced of the propylene copolymer (A) then after the manufacture of the inventive material the following steps follow. In general the inventive propylene copolymer (A) is extruded and subsequently formed into a pipe.

Accordingly the inventive pipe is preferably produced by first plasticizing the propylene copolymer (A) of the instant invention in an extruder at temperatures in the range of from 200 to 300 °C and then extruding it through an annular die and cooling it.

The extruders for producing the pipe can be single screw extruders with an L/D of 20 to 40 or twin screw extruders or extruder cascades of homogenizing extruders (single screw or twin screw). Optionally, a melt pump and/or a static mixer can be used additionally between the extruder and the ring die head. Ring shaped dies with diameters ranging from approximately 16 to 2000 mm and even greater are possible.

The melt arriving from the extruder is first distributed over an annular cross-section via conically arranged holes and then fed to the core/die combination via a coil distributor or screen. If necessary, restrictor rings or other structural elements for ensuring uniform melt flow may additionally be installed before the die outlet. After leaving the annular die, the pipe is taken off over a calibrating mandrel, usually accompanied by cooling of the pipe by air cooling and/or water cooling, optionally also with inner water cooling.

The present invention will now be described in further detail by the examples provided below.

## Examples

### Definitions/Measuring Methods

The following definitions of terms and determination methods apply for the above general description of the invention as well as to the below examples unless otherwise defined.

### Melting temperature and degree of crystallinity

Melting temperature Tm, crystallization temperature Tcr, and the degree of crystallinity were measured with Mettler TA820 differential scanning calorimetry (DSC) on 5 to 10 mg, typically 8±0.5 mg samples. Both crystallization and melting curves were obtained during 10°C/min cooling and heating scans between 30°C and 225°C. Melting and crystallization temperatures were taken as the peaks of endotherms and exotherms. The degree of crystallinity was calculated by comparison with heat of fusion of a perfectly crystalline polypropylene, i.e. 209 J/g.

**Number average molecular weight ($M_n$), weight average molecular weight ($M_w$) and molecular weight distribution (MWD)** are determined by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**Rheology:** Dynamic rheological measurements were carried out with Rheometrics RDA-II QC on compression molded samples under nitrogen atmosphere at 200°C using 25 mm -diameter plate and plate geometry. The oscillatory shear experiments were done within the linear viscoelastic range of strain at frequencies from 0.01 to 500 rad/s. (ISO6721-1)
The values of storage modulus (G'), loss modulus (G"), complex modulus (G*) and complex viscosity (η*) were obtained as a function of frequency (ω).
The Zero shear viscosity ($\eta_0$) was calculated using complex fluidity defined as the reciprocal of complex viscosity. Its real and imaginary part are thus defined by

$$f'(\omega) = \eta'(\omega) / [\eta'(\omega)^2 + \eta''(\omega)^2]$$

and

$$f'(\omega) = \eta''(\omega) / [\eta'(\omega)^2 + \eta''(\omega)^2]$$

From the following equations

$$\eta' = G'' / \omega \quad \text{and} \quad \eta'' = G' / \omega$$

$$f'(\omega) = G''(\omega) \cdot \omega / [G'(\omega)^2 + G''(\omega)^2]$$

$$f''(\omega) = G'(\omega) \cdot \omega / [G'(\omega)^2 + G''(\omega)^2]$$

**The polydispersity index, PI,** is calculated from cross-over point of G'(ω) and G''(ω).
There is a linear correlation between f' and f'' with zero ordinate value of $1/\eta_0$ (Heino et al.[1])
For polypropylene this is valid at low frequencies and five first points (5 points/decade) are used in calculation of $\eta_0$.

**Shear thinning indexes (SHI),** which are correlating with MWD and are independent of MW, were calculated according to Heino [1 2)] (below).

**SHI**

SHI is calculated by dividing the Zero Shear Viscosity by a complex viscosity value, obtained at a certain constant shear stress value, G*. The abbreviation, SHI (0/50), is the ratio between the zero shear viscosity and the viscosity at the shear stress of 50 000 Pa.

1) Rheological characterization of polyethylene fractions. Heino, E.L.; Lehtinen, A; Tanner, J.; Seppälä, J. Neste Oy, Porvoo, Finland. Theor. Appl. Rheol., Proc. Int. Congr. Rheol., 11th (1992), 1 360-362
2) The influence of molecular structure on some rheological properties of polyethylene. Heino, Eeva-Leena. Borealis Polymers Oy, Porvoo, Finland. Annual Transactions of the Nordic Rheology Society, 1995

**NMR-spectroscopy measurements:**

The $^{13}C$-NMR spectra of polypropylenes were recorded on Bruker 400MHz spectrometer at 130 °C from samples dissolved in 1,2,4-trichlorobenzene/benzene-d6 (90/10 w/w). For the pentad analysis the assignment is done according to the methods described in literature: (T. Hayashi, Y. Inoue, R. Chüjö, and T. Asakura, Polymer 29 138-43 (1988).and Chujo R, et al, Polymer 35 339 (1994).

The NMR-measurement was used for determining the mmmm pentad concentration in a manner well known in the art.

**Melt Flow Rate ($MFR_2$)**

The melt flow rates were measured with a load of 2.16 kg at 230 °C. The melt flow rate is that quantity of polymer in grams which the test apparatus standardized to ISO 1133 extrudes within 10 minutes at a temperature of 230 °C under a load of 2.16 kg.

**Comonomer content**

The comonomer contents of the copolymer was determined by quantitative Fourier transform infrared spectroscopy (FTIR) calibrated to results obtained from quantitative $^{13}C$ NMR spectroscopy.

Thin films were pressed to a thickness of between 300 to 500 μm at 190 °C and spectra recorded in transmission mode. Relevant instrument settings include a spectral window of 5000 to 400 wave-numbers ($cm^{-1}$), a resolution of 2.0 $cm^{-1}$ and 8 scans.

The butene content of a propylene-butene copolymer was determined using the baseline corrected peak maxima of a quantitative band at 767 $cm^{-1}$, with the baseline defined from 780-750 $cm^{-1}$.

The hexene content of a propylene-hexene copolymer was determined using the baseline corrected peak maxima of a quantitative band at 727 $cm^{-1}$, with the baseline defined from 758.5 to 703.0 $cm^{-1}$)

The comonomer content C was determined using a film thickness method using the intensity of the quantitative band I(q) and the thickness of the pressed film T using the following relationship: [ I(q) / T ]m + c = C where m and c are the coefficients determined from the calibration curve constructed using the comonomer contents obtained from 13C NMR spectroscopy.

**Content of ß-modification:**

The ß-crystallinity is determined by Differential Scanning Calorimetry (DSC). DSC is run according to ISO 3146/ part 3 /method C2 with a scan rate of 10 °C/min. The amount of ß-modification is calculated from the second heat by the following formula:

$$\text{ß-area}/(\alpha\text{-area} + \text{ß-area})$$

Since the thermodynamical ß-modification starts to be changed into the more stable α-modification at temperatures above 150 °C, a part of the ß-modification is transferred within the heating process of DSC-measurement. Therefore, the amount of ß-PP determined by DSC is lower as when measured according to the method of Turner-Jones by WAXS (A. Turner-Jones et. al., Makromol. Chem 75 (1964) 134). "Second heat" means that the sample is heated according to ISO 3146 / part 3 / method C2 for a first time and then cooled to room temperature at a rate of 10 °C/min. The sample is then heated a second time, also according to ISO 3146 /part 3 / method C2. This second heat is relevant for measurement and calculation.

During the "first heat" all thermal history of the sample giving rise to different crystalline structure, which typically comes from different processing conditions and/or methods, is destroyed. Using the second heat for determination of β-crystallinity, it is possible to compare samples regardless of the way the samples were originally manufactured.

**The xylene solubles (XS, wt.-%):**

Analysis according to the known method (ISO 6427): 2.0 g of polymer is dissolved in 250 ml p-xylene at 135°C under agitation. After 30±2 minutes the solution is allowed to cool for 15 minutes at ambient temperature (21 °C) and then allowed to settle for 30 minutes at 25±0.5°C. The solution is filtered and evaporated in nitrogen flow and the residue dried under vacuum at 90 °C until constant weight is reached.

$$XS\% = (100 \text{ x } m_1 \text{ x } v_0) / (m_0 \text{ x } v_1),$$

wherein

$m_0$= initial polymer amount (g)
$m_1$ = weight of residue (g)
$v_0$= initial volume (ml)
$V_1$ = volume of analyzed sample (ml)

**Intrinsic viscosity** is measured according to DIN ISO 1628/1, October 1999 (in Decalin at 135 °C).

**Charpy impact strength**

Charpy impact strength was determined according to ISO 179:2000 on V-notched samples at 23 °C (Charpy impact strength (23°C)) and -20 °C (Charpy impact strength (-20°C)) by using injection moulded test specimens as described in EN ISO 1873-2 (80x10x4 mm).

**Flexural modulus**

Flexural modulus: was measured according to ISO 178 (room temperature, if not otherwise mentioned) by using injection moulded test specimens as described in EN ISO 1873-2 (80x10x4 mm).

**FNCT**

Is determined according ISO 16770. The test specimens are compression moulded plates (thickness 10 mm). The test specimens are stressed in an aqueous solution at 80 °C and 4 $N/mm^{-2}$.

**Inventive Example 1 (E 1)**

Raw material:

- hexane dried over molecular sieve (3/10A)
- TEAL: 93% from sigma-Aldrich
- catalyst: BCF20P (1.9wt.-% Ti/ Ziegler-Natta-catalyst) of Borealis
- white oil: trade name: Primol 352D; ex Esso Austria Ges.m.b.H
- donor dicyclopentyldimethoxysilane: ex Wacker Chemie (99%).
- $N_2$: supplier AGA, quality 5.0; purification with with catalyst BASF R0311, catalyst G132 (CuO/ZNO/C), molecular sieves (3/10A) and P2O5.
- propylene
- hexene-1: for synthesis; supplier MERCK; purified by $N_2$-bubbling
- hydrogen: supplier AGA, quality 6.0

Polymerisation has been conducted in a 51-autoclave (bulk polymerisation):

The autoclave has been purified by mechanical cleaning, washing with hexane and heating under vacuum/$N_2$ cycles at 155 °C. After testing for leaks with 30 bar $N_2$ over night reactor has been vacuumed and filled with specified amount of propylene, hexene-1 (by weighing) and $H_2$ (via flow-meter).

BCF20P-catalyst is contacted with white oil over night and activated for 5 minutes with a mixture of triethylaluminium (TEA1; solution in hexane lmol/l) and dicyclopentyldimethoxysilane as donor (0.3 mol/l in hexane) - in a specified molar ratio after a contact time of 5min - and 10 ml hexane in a catalyst feeder. The molar ratio of TEA1 and Ti of catalyst is 250 [mol/mol]. After activation the catalyst is spilled with liquid propylene into the stirred (150 rpm) reactor. After catalyst dosing stirring speed is set to 350 rpm. After 6 min pre-polymerisation at 23 °C temperature is increased to 80 °C (achieved after 14 min). These conditions are hold for 60 min (starting point is polymerization-temperature = 79 °C) and then polymerisation is stopped by exhausting the monomers and cooling to room temperature.

After spilling the reactor with $N_2$ the random-copolymer powder is transferred to a steel container. 5g of the polymer has been dried in a hood over night and additionally in a vacuum oven for 3 hours at 60 °C for analysis of hexene-1 content. The main part has been dried over night in a hood at room temperature. Total amount of polymer was weighed and catalyst activity calculated.

**Table 1:** Polymerisation parameters and results for E 1

| | **Reactor filling before start** | | | **Cat. activation** | **Cat. dosing** | | **result** | |
|---|---|---|---|---|---|---|---|---|
| | C3 | C6 | $H_2$ | TEAl/donor | $C_3$ | res. time | Yield | cat. activity |
| | [g] | [g] | [In] | mol/mol | [g] | [min] | [g] | [kg/g•h] |
| **E 1** | 1089 | 253 | 8 | 4 | 231 | 60 | 337 | 28.8 |
| C6: hexene-1<br>C3: propylene | | | | | | | | |

44 g of E I has been compounded with Irganox 1010 FF (0.2 wt.-%), Ca-stearate (0.07 wt.-%), Irgafos 168 FF (0.1 wt.-%), Irganox 1330 (0.5 wt.-%) and EMB250 grey 7042 from Mastertec GmbH (masterbatch with ß-nucleating agent) (2.0 wt.-%) using a 2-screw extruder Prism TSE16. EMB250 grey 7042 contains the following compounds:

49.2 wt.-% RE 216 CF (CAS-no 9010-79-1) [random copolymer of Borealis]
47.0 wt.-% P. White 7 (CAS-no 1314-98-3)
0.5 wt.-% P. Black 7 (CAS-no 1333-86-4)
2.0 wt.-% P. Green 17 (CAS-no 1308-38-9)
1.3 wt.-% P. Blue 28 (CAS-no 1345-16-0)
0.25 wt.-% P. Orange 48 (CAS-no 1503-48-6)

This granulate has been used for characterisation (except for hexene-1 content) and in sample preparation for mechanical testing (DMTA, flexural properties, impact properties and FNCT-test).

Flexural and impact properties have been measured at bars with dimension 4*10*80 [mm], which are injection moulded using a machine Engel V60 Tech with a 22 mm screw at 255°C at a pressure of 50 bar and post-pressure of 55 bar. The testing is done after 7 days storage at 23 °C.

Bars for FNCT test are made by a slab press using a metal form of dimensions 12*~20*120 [mm], which is filled with granulate. The machine is a Collin press P400. The pressure/temperature/time profile of the pressing action is as follows:

| | | | | | | |
|---|---|---|---|---|---|---|
| Time | [min] | 12 | 1 | 1 | 10 | 12 |
| Temperature | [°C] | 220 | 220 | 220 | 30 | 20 |
| Pressure | [bar] | 0 | 5 | 5 | 6 | 15 |

The specimens are cut after the forming procedure to the accurate dimension for testing, which has been done at the HESSEL Ingenieurtechnik GmbH.

**Inventive Example 2 (E 2)**

**Table 2**: Polymerisation parameters and results for E 2

| | **Reactor filling before start** | | | **Cat. activation** | **Cat. dosing** | | **result** | |
|---|---|---|---|---|---|---|---|---|
| | C3 | C6 | $H_2$ | TEAl/donor | C3 | time | Yield | cat. activity |
| | [g] | [g] | [ln] | mol/mol | [g] | [min] | [g] | [kg/g·•h] |
| **E 2** | 1088 | 254 | 4.5 | 4 | 231 | 45 | 943 | 26.1 |
| C6: hexene-1<br>C3: propylene | | | | | | | | |

Polymerisation has been done according to Example 1. The results can be deducted from table 2.

E 2 has been compounded according to the recipe of Example 1. Testing has also been done in the same way.

**Inventive Example 3 (E3)**

An autoclave has been purified by mechanical cleaning, washing with hexane and heating under vacuum/$N_2$ cycles at 155 °C. After testing for leaks with 30 bar $N_2$ over night reactor has been vacuumed and filled with specified amount of propylene, hexene-1 (by weighing) and $H_2$ (via flow-meter).

BCF20P-catalyst is contacted with white oil over night and activated for 5 minutes with a mixture of triethylaluminium (TEA1; solution in hexane 1mol/l) and dicyclopentyldimethoxysilane as donor (0.3 mol/l in hexane) - in a specified molar ratio after a contact time of 5 min - and 10 ml hexane in a catalyst feeder. The molar ratio of TEA1 and Ti of catalyst is 250 [mol/mol]. After activation the catalyst is spilled with liquid propylene into the stirred (150 rpm) reactor. After catalyst dosing stirring speed is set to 350 rpm. After 6 min pre-polymerisation at 23 °C temperature is increased to 80 °C (achieved after 14min). To hold a constant pressure propylene has been dosed if the pressure was below 28 bar. These conditions are hold for 60 min (starting point is polymerization-temperature = 79 °C) and then polymerisation is stopped by exhausting the monomers and cooling to room temperature. Parameters and results are indicated in Table 2.

After spilling the reactor with N2 the random-copolymer powder is transferred to a steel container. 5g of the polymer has been dried in a hood over night and additionally in a vacuum oven for 3 hours at 60°C for analysis of hexene-1 content. The main part has been dried over night in a hood at room temperature. Total amount of polymer was weighed and catalyst activity calculated. Parameters and results are indicated in Table 3.

**Table 3:** Polymerisation parameters and results for E 3

| | Reactor filling before start | | | Cat. activation | Cat. dosing | | result | |
|---|---|---|---|---|---|---|---|---|
| | C3 | C6 | $H_2$ | TEAl/donor | C3 | res. time | Yield | cat activity |
| | [g] | [g] | [ln] | mol/mol | [g] | [min] | [g] | [kg/g•h] |
| **E 2** | 1088 | 251 | 4.5 | 4 | 232 | 60 | 638 | 17.8 |
| C6: hexene-1<br>C3: propylene | | | | | | | | |

538,6g of E 3 has been compounded with Irganox 1010 FF (0.2 wt.-%), Ca-stearate (0.07 wt.-%), Irgafos 168 FF (0.1 wt.-%), Irganox 1330 (0.5 wt.-%) and EMB250 grey 7042 (masterbatch with β-nucleating agent) (2.0 wt.-%) using a 2-screw extruder Prism TSE16.

The resulting granulate has been used for characterisation (except for hexene-1 content) and in sample preparation for mechanical testing (DMTA, flexural properties, impact properties and FNCT-test).
Testing has been done in accordance to Example 1.

**Comparative Example 1 (CE 1)**

CE 1 is a beta-nucleated propylene/butene copolymer (C4 comonomer content: 4.3 wt.-%). The composition was prepared using a Ziegler-Natta catalyst as indicated in table 4.

**Table 4:** Polymerisation parameters and results for CE 1

| **Product name** | | **CE 1** |
|---|---|---|
| Catalyst type | | BCF20P |
| Donor type | | D |
| Al/Ti ratio | [mol/mol] | 200 |
| Al/donor ratio | [mol/mol] | 10 |
| LOOP | | |
| Temperature | [°C] | 85 |
| H2/C3 ratio | [mol/kmol] | 0.12 |
| C4/C3 ratio | [mol/kmol] | 151.5 |
| Split | [%] | 100 |
| $MFR_2$ | [g/10 min] | 0.22 |
| XS | [%] | 2.6 |
| C4 content | [wt.-%] | 4.3 |
| | | |
| CaSt | [ppm] | 700 |
| Irganox B215 | [ppm] | |
| Irganox 1330 | [ppm] | 5000 |
| Irgafos 168 | [ppm] | 1000 |
| Irganox 1010 | [ppm] | 2000 |

(continued)

| Product name | | CE 1 |
|---|---|---|
| EMB250 grey 7042 | [ppm] | 20000 |
| D: dicyclopentyldimethoxysilane<br>C4: butene-1<br>C3: propylene<br>H2: hydrogen<br>CaSt: Ca-stearate | | |

The properties of the polypropylenes obtained from E 1, E 2, E 3 and CE 1 are shown in Table 5.

**Table 5:**

| Example | Unit | CE 1 | E 1 | E 2 | E 3 |
|---|---|---|---|---|---|
| Dosing butene | [w%] | >7 | - | - | - |
| Content butene | [w%] | 4.3 | - | - | - |
| Dosing hexene | [w%] | - | >10% | >10% | >10% |
| Content hexene | [w%] | - | 1.4 | 2.2 | 1.39 |
| $MFR_2$ | [g/10min] | 0.26 | 0.23 | 0.23 | 0.20 |
| intr. visc. | [ml/g] | 397 | 471 | 434 | 462 |
| Tm2 | [°C] | 142.5 | 141.8 | 138.3 | 141.1 |
| Tm3 | [°C] | 155.9 | 155.3 | 152.0 | 155.0 |
| Hm2 | [J/g] | 79.4 | 70.8 | 66.8 | 73.1 |
| Hm3 | [J/g] | 14.5 | 21.1 | 19.0 | 22.2 |
| β | [%] | 84.56 | 77.04 | 77.86 | 76.71 |
| cristallinity | [%] | 44.93 | 43.97 | 41.05 | 45.60 |
| XCS | [wt%] | 2.68 | 2.10 | 2.23 | 1.97 |
| Peak's tan d | [°C] | 1.7 | 2 | 2.3 | 3.5 |
| Peak's tan_d | [°C] | 87.8 | 76.8 | 71.4 | 76.3 |
| Peak's tan_d | [°C] | 137.8 | 135.0 | 131.8 | 135.0 |
| G' (23°C) | [MPa] | 641 | 609 | 500 | 588 |
| wc | [rad/s] | 2.05 | 1.065 | 1.518 | 1.16 |
| PI | [$Pa^{-1}$] | 3.55 | 5.26 | 4.18 | 4.65 |
| SHI0/50 | | 8.18 | 18 | 11.05 | 13.55 |
| flex. mod. | [MPa] | 1161.5 | 1144.3 | 990.5 | 1144.7 |
| flex. strength | [MPa] | 33 | 33.2 | 29.8 | 32.6 |
| flex. strain at flex. strength | % | 7.3 | 7.2 | 7.3 | 7.2 |
| flex. stress at 3.5% strain | [MPa] | 26.5 | 26.8 | 23.7 | 26.3 |
| impact strength (23 °C) | [$kJ/m^2$] | 72.8 | 41.9 | 45.8 | 46.9 |
| type of failure | None | Part. br. | Part. br. | Part. br. | Part. br. |
| impact strength (0°C) | [$kJ/m^2$] | 5.1 | 2.1 | 2.2 | 2.3 |
| type of failure | None | Compl. br. | Compl. br. | Compl. br. | Compl. br. |
| impact strength (-20°C) | [$kJ/m^2$] | 2.7 | 2.1 | 2 | 2 |

(continued)

| Example | Unit | CE 1 | E 1 | E 2 | E 3 |
|---|---|---|---|---|---|
| type of failure | None | Compl. br. | Compl. br. | Compl. br. | Compl. br. |
| FNCT/1 | h | 792.5 | 7458.3 | 9113.8 | 7763.2 |
| FNCT/2 | h | 875.8 | 7563.3 | 9464.3 | 7342.4 |
| FNCT/3 | h | 887.0 | 7549.3 | 8568.6 | 7093.9 |

## Claims

1. Propylene copolymer (A)

   (a) comprising at least 1-hexene as a comonomer,
   (b) having a comonomer content in the range of 1.0 to 3.0 wt.-%,
   (c) having a xylene cold soluble fraction equal or below 2.5 wt.-%, and
   (d) being partially crystallized in the β-modification.

2. Propylene copolymer according to claim 1, wherein the copolymer (A) comprises a β-nucleating agent (B).

3. Propylene copolymer (A)

   (a) comprising at least 1-hexene as a comonomer,
   (b) having a comonomer content in the range of 1.0 to 3.0 wt.-% ,
   (c) having a xylene cold soluble fraction equal or below 2.5 wt.-%, and
   (d) comprising a β-nucleating agent (B).

4. Propylene copolymer according to claim 3, wherein the copolymer (A) is partially crystallized in the β-modification.

5. Propylene copolymer (A) according to any one of the preceding claims, wherein propylene copolymer (A) has a $MFR_2$ (230 °C) of not more than 0.8 g/10min measured according to ISO 1133.

6. Propylene copolymer (A) according to any one of the preceding claims, wherein the 1-hexene content of the propylene copolymer (A) is in the range of 1.0 to 2.0 wt.-%.

7. Propylene copolymer (A) according to any one of the preceding claims, wherein the propylene copolymer (A) is only constituted by propylene and 1-hexene units.

8. Propylene copolymer (A) according to any one of the preceding claims, wherein the comonomer content of the propylene copolymer (A) is in the range of 1.0 to 2.0 wt.-%.

9. Propylene copolymer (A) according to any one of the preceding claims, wherein the propylene copolymer (A) has a polydispersity index (PI) of 3.0 to 8.0 $Pa^{-1}$.

10. Propylene copolymer (A) according to any one of the preceding claims, wherein the amount of the β-modification of the propylene copolymer (A) is at least 50 %.

11. Propylene copolymer (A) according to any one of the preceding claims, wherein the propylene copolymer (A) has a flexural modulus measured according to ISO 178 of at least 950 MPa.

12. Propylene copolymer (A) according to any one of the preceding claims, wherein the propylene copolymer (A) has an impact strength measured according the Charpy impact test (ISO 179 (1eA)) at 23 °C of at least 35.0 $kJ/m^2$ and/or an impact strength measured according the Charpy impact test (ISO 179 (1eA)) at -20°C of at least 1.5 $kJ/m^2$.

13. Propylene copolymer according to any one of the preceding claims, wherein the propylene copolymer (A) has a FNCT measured according to ISO 16770 (at 80 °C and applied stress of 4.0 MPa) of more than 7000 h.

**14.** Use of a propylene copolymer (A) according to any one of the preceding claims for pipes or parts of pipes.

**15.** Process for the manufacture of the propylene copolymer (A) according to any one of the preceding claims 1 to 13, wherein the propylene copolymer (A) is produced in the presence of Ziegler Natta catalyst and subsequently β-nucleated.

**16.** Pipe comprising a propylene copolymer (A) according to any one of the preceding claims 1 to 13.

**17.** Pipe according to claim 16, wherein the pipe is a pressure pipe.

**Patentansprüche**

**1.** Propylen-Copolymer (A)

(a) umfassend mindestens 1-Hexen als Comonomer,
(b) enthaltend einen Comonomeranteil im Bereich von 1,0 bis 3,0 Gew.-%;
(c) enthaltend eine Xylol-kaltlösliche Fraktion gleich oder weniger als 2,5 Gew.-%, und
(d) zumindest teilweise in der β-Modifikation kristallisiert.

**2.** Propylen-Copolymer nach Anspruch 1, worin das Copolymer (A) ein β-Nukleierungsmittel (B) umfasst.

**3.** Propylen-Copolymer (A)

(a) umfassend mindestens 1-Hexen als Comonomer,
(b) enthaltend einen Comonomeranteil im Bereich von 1,0 bis 3,0 Gew.-%,
(c) enthaltend eine Xylol-kaltlösliche Fraktion von gleich oder weniger als 2,5 Gew.-%, und
(d) umfassend ein β-Nukleierungsmittel (B).

**4.** Propylen-Copolymer nach Anspruch 3, worin das Copolymer (A) zumindest teilweise in der β-Modifikation kristallisiert ist.

**5.** Propylen-Copolymer (A) nach irgendeinem der vorhergehenden Ansprüche, worin das Propylen-Copolymer (A) einen nach ISO 1133 gemessenen $MFR_2$ (230°C) von nicht mehr als 0,8 g/10min hat.

**6.** Propylen-Copolymer (A) nach irgendeinem der vorhergehenden Ansprüche, worin der 1-Hexenanteil des Propylen-Copolymer (A) im Bereich von 1,0 bis 2,0 Gew.-% ist.

**7.** Propylen-Copolymer (A) nach irgendeinem der vorhergehenden Ansprüche, worin das Propylen-Copolymer (A) nur aus Propylen und 1-Hexeneinheiten besteht.

**8.** Propylen-Copolymer (A) nach irgendeinem der vorhergehenden Ansprüche, worin der Comonomeranteil des Propylen-Copolymers (A) im Bereich von 1,0 bis 2,0 Gew.-% ist.

**9.** Propylen-Copolymer (A) nach irgendeinem der vorhergehenden Ansprüche, worin das Propylen-Copolymer (A) einen Polydispersitätindex (PI) von 3,0 bis 8,0 $Pa^{-1}$ hat.

**10.** Propylen-Copolymer (A) nach irgendeinem der vorhergehenden Ansprüche, worin die Menge an β-Modifikation des Propylen-Copolymers (A) mindestens 50% ist.

**11.** Propylen-Copolymer (A) nach irgendeinem der vorhergehenden Ansprüche, worin das Proplylen-Copolymer (A) einen nach ISO 178 gemessenen Biegemodul von mindestens 950 MPa hat.

**12.** Propylen-Copolymer (A) nach irgendeinem der vorhergehenden Ansprüche, worin das Propylen-Copolymer (A) eine Kerbschlagzähigkeit gemessen nach dem Kerbschlag-Biegeversuch nach Charpy (ISO 179 (1eA)) bei 23°C von mindestens 35,0 $kJ/m^2$ und/oder eine Kerbschlagzähigkeit gemessen nach dem Kerbschlag-Biegeversuch nach Charpy (ISO 179 (eA)) bei -20°C von mindestens 1,5 $kJ/m^2$ hat.

**13.** Propylen-Copolymer nach irgendeinem der vorhergehenden Ansprüche, worin das Propylen-Copolymer (A) einen nach ISO 16770 (bei 80°C Belastung von 4,0 MPa) FNCT von mehr als 7000 Std. hat.

**14.** Verwendung des Propylen-Copolymer (A) nach irgendeinem der vorhergehenden Ansprüche für Rohre oder Teile von Rohren.

**15.** Verfahren zur Herstellung eines Propylen-Copolymers (A) nach irgendeinem der Ansprüche 1 bis 13, worin das Propylen-Copolymer (A) in Gegenwart eines Ziegler Natta Katalysators hergestellt worden ist und anschließend β-nukleiert wurde.

**16.** Rohr umfassend ein Propylen-Copolymer (A) nach irgendeinem der Ansprüche 1 bis 13.

**17.** Rohr nach Anspruch 16, worin das Rohr ein Druckrohr ist.

## Revendications

**1.** Copolymère de propylène (A)

(a) comprenant au moins du 1-hexène en tant que comonomère,
(b) présentant une teneur en comonomère dans la plage de 1,0 à 3,0 % en poids,
(c) présentant une fraction soluble à froid dans le xylène inférieure ou égale à 2,5 % en poids, et
(d) étant partiellement cristallisé dans la modification β.

**2.** Copolymère de propylène selon la revendication 1, où le copolymère (A) comprend un agent de β-nucléation (B).

**3.** Copolymère de propylène (A)

(a) comprenant au moins du 1-hexène en tant que comonomère,
(b) présentant une teneur en comonomère dans la plage de 1,0 à 3,0 % en poids,
(c) présentant une fraction soluble à froid dans le xylène inférieure ou égale à 2,5 % en poids, et
(d) comprenant un agent de β-nucléation (B).

**4.** Copolymère de propylène selon la revendication 3, dans lequel le copolymère (A) est partiellement cristallisé dans la modification β.

**5.** Copolymère de propylène (A) selon l'une quelconque des revendications précédentes, où le copolymère de propylène (A) présente un indice de fluidité en masse $MFR_2$ (230 °C) ne dépassant pas 0,8 g/10 min, mesuré selon ISO 1133.

**6.** Copolymère de propylène (A) selon l'une quelconque des revendications précédentes, dans lequel la teneur en 1-hexène du copolymère de propylène (A) est dans la plage de 1,0 à 2,0 % en poids.

**7.** Copolymère de propylène (A) selon l'une quelconque des revendications précédentes, où le copolymère de propylène (A) est uniquement constitué par des motifs propylène et 1-hexène.

**8.** Copolymère de propylène (A) selon l'une quelconque des revendications précédentes, dans lequel la teneur en comonomère du copolymère de propylène (A) est comprise dans la plage de 1,0 à 2,0 % en poids.

**9.** Copolymère de propylène (A) selon l'une quelconque des revendications précédentes, où le copolymère de propylène (A) présente un indice de polydispersité (PI) compris entre 3,0 et 8,0 $Pa^{-1}$.

**10.** Copolymère de propylène (A) selon l'une quelconque des revendications précédentes, dans lequel la quantité de la modification β du copolymère de propylène (A) est au moins égale à 50 %.

**11.** Copolymère de propylène (A) selon l'une quelconque des revendications précédentes, où le copolymère de propylène (A) présente un module de flexion mesuré selon ISO 178 au moins égal à 950 MPa.

**12.** Copolymère de propylène (A) selon l'une quelconque des revendications précédentes, où le copolymère de propylène (A) présente une résistance au choc mesurée selon l'essai de résilience Charpy (ISO 179 (1eA)) à 23 °C au moins égale à 35,0 $kJ/m^2$ et/ou une résistance au choc mesurée selon l'essai de résilience Charpy (ISO 179 (1eA)) à -20 °C au moins égale à 1,5 $kJ/m^2$.

**13.** Copolymère de propylène (A) selon l'une quelconque des revendications précédentes, où le copolymère de propylène (A) présente un essai de fissuration sous contrainte sur éprouvette entièrement entaillée (FNCT) mesuré selon ISO 16770 (à 80 °C et sous contrainte appliquée de 4,0 MPa) de plus de 7 000 heures.

**14.** Utilisation d'un copolymère de propylène (A) selon l'une quelconque des revendications précédentes pour des conduites ou parties de conduites.

**15.** Procédé de fabrication du copolymère de propylène (A) selon l'une quelconque des revendications 1 à 13, dans lequel le copolymère de propylène (A) est produit en présence d'un catalyseur de Ziegler Natta et est ensuite β-nucléé.

**16.** Conduite comprenant un copolymère de propylène (A) selon l'une quelconque des revendications précédentes 1 à 13.

**17.** Conduite selon la revendication 16, où la conduite est une conduite sous pression.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005040271 A1
- WO 2006002778 A1
- WO 03042260 A
- EP 0682066 A
- EP 0787750 A
- EP 591224 A
- WO 9426794 A

### Non-patent literature cited in the description

- **B.H. Zimm ; W.H. Stockmeyer.** *J. Chem. Phys.,* 1949, vol. 17, 1301
- **Heino, E.L. ; Lehtinen, A ; Tanner, J. ; Seppälä, J. ; Neste Oy ; Porvoo, Finland.** *Theor. Appl. Rheol., Proc. Int. Congr. Rheol.,* November 1992, vol. 1, 360-362
- **Heino, Eeva-Leena ; Borealis Polymers Oy ; Porvoo, Finland.** *Annual Transactions of the Nordic Rheology Society,* 1995
- **T. Hayashi ; Y. Inoue ; R. Chüjö ; T. Asakura.** *Polymer,* 1988, vol. 29, 138-43
- **Chujo R et al.** *Polymer,* 1994, vol. 35, 339
- **A. Turner-Jones.** *Makromol. Chem,* 1964, vol. 75, 134